# EUROPEAN PATENT SPECIFICATION

(11) **EP 2 778 218 B1**
(45) Date of publication and mention of the grant of the patent: **05.12.2018**
(21) Application number: 14158468.0
(22) Date of filing: 10.03.2014
(51) Int. Cl.: C12C 3/06, C12C 3/08, C12C 3/10, C12C 3/12

(54) **NOVEL HOP POWDERS**
NEUARTIGE HOPFENPULVER
NOUVELLES POUDRES DE HOUBLON

(30) Priority: 11.03.2013 US 201361776550 P; 05.03.2014 US 201414198196
(43) Date of publication of application: 17.09.2014
(73) Proprietor: S.S. STEINER, INC., New York, NY 10065-8043 (US)
(72) Inventor: Leker, Jeremy, Yakima, WA 98908 (US); Smith, Robert, Yakima, WA 98908 (US); Maye, John Paul, Great Falls, VA 22066 (US); Gimbel, Adam, Atlantic Highlands, NJ 07716 (US); Schwarz, Harald, Seattle, WA 98105 (US)
(74) Representative: Prinz & Partner mbB

(56) References cited:
- WO-A1-2012/081676
- WO-A2-03/000185
- US-A- 6 020 019
- LAWS D R J ET AL: "The use of concentrated isomerised hop extracts made without the aid of organic solvents", PROCEEDINGS, EUROPEAN BREWERY CONVENTION,, 1 January 1979 (1979-01-01), pages 393-403, XP009141221,

## Description

### CROSS-REFERENCE TO RELATED APPLICATIONS

This application claims priority from U.S. Provisional Application Serial No. 61/776,550 filed March 11, 2013.

### TECHNICAL FIELD - BACKGROUND OF THE INVENTION

The present invention relates to producing flowable, non-sticky, stable hop powders. Hops have a long history of use as a flavor agent and preservative in beer. Hop flowers contain high concentrations of organic acids, polyphenols, essential oils, waxes and fats, cooperatively known as hop resin. Hop resin can make-up as much as 30% to 40% by weight of the dried hop flower and this resin is known for its stickiness. Hop resin is readily extracted with solvents such as liquid or supercritical carbon dioxide. The organic acids within hops, Humulone (also known as alpha acids) and Lupulone (also known as beta acids), are known for their strong antibacterial properties and can selectively inhibit gram positive bacteria growth. When hops are boiled in the brew kettle the alpha acids within the hops thermally isomerize to form isoalpha acids. Isoalpha acids give beer its bitter flavor, however, they are not light stable. That is, when beer is packaged in clear or green bottles, the isoalpha acids can react with visible light and in presence of riboflavin and natural sulfur compounds in beer form the mercaptan 3-methyl-2-butene-1-thiol. This mercaptan has a strong skunky like aroma and is detectable in beer at the ppb level. To make light stable hop acids, hops are extracted, the alpha acids isolated and isomerized and the resulting isoalpha acids reduced with sodium borohydride or catalytic palladium on carbon with hydrogenation gas or both. Like Humulone and Lupulone, isomerized and reduced hop acids are also antibacterial. Hops and hop acids are finding new uses, for example as natural antibacterial for the production of fuel ethanol, spirits, yeast and animal feed. The incorporation of hop acids into animal feed can be problematic if the hop acids are not homogeneously distributed throughout the feed. In order to be effective, it is important that the animal gets a consistent dosing of the hop acid with every "bite" of feed. Raw hop powder can readily perform this task; however, due to the very high resin content hop powder is very sticky. This stickiness causes hop powder to clump, making the handling and dosing, particularly through automatic dosing systems nearly impossible. This clumping of the hop powder causes serious problems at feed mills and feed manufacturers as it does not permit a consistent dosing and production of a feed with a homogenous concentration of the active ingredient. As a result, there is a real need to produce a hop powder that is not sticky and does not clump.

WO 2012/081676 A1 discloses a hop extract having reduced bitter taste and a fat absorption inhibitory activity, which is produced by an oxidation reaction of a hop extract.

WO 03/000185 A2 relates to a formulation that serves to specifically inhibit the COX-2 mediated inflammatory response in animals. The formulation comprises an effective amount of component I selected from the group consisting of alpha acids and beta acids and an effective amount of at least one component II selected from the group consisting of alpha acids, beta acids, essential oils, fats and waxes, with the proviso that component I and II are not the same compound. The composition provides specific inhibition of cyclooxygenase-2 with little or no effect on cyclooxygenase-1.

US 6,020,019 A discloses the use of carbon dioxide as a reaction solvent in the hydrogenation of organic compounds. The carbon dioxide is preferably a liquid or a supercritical fluid. The hydrogenation method can be used advantageously in methods for making tetrahydroiso-alpha-acids from alpha-acids, iso-alpha-acids, or beta-acids. If beta-acids are used to make tetrahydroiso-alpha-acids, an acidic lower alcohol is preferably added to the carbon dioxide reaction medium to act as a promoter.

Laws D.R. et al.: "The use of concentrated isomerized hop extracts made without the aid of organic solvents", Proceedings, European Brewery Convention, 1 January 1979, pages 393 to 403, discloses a method for obtaining an improved isomerized hop extract product, by removing the beta-acid fraction prior to isomerization of a CO2 extract of hops.

### SUMMARY OF THE INVENTION

The present invention is defined in annexed claim 1. Preferred embodiments of the present invention are defined in the dependent claims. We discovered that if one extracts hops with a solvent such as liquid or super critical CO2 gas one can remove most of the hop resin producing a non-sticky hop powder we call PPP. By blending back individual hop acids to PPP one can make a free flowing powder that does not brick-up when packaged or cake-up when added via an automatic dosing systems at feed mills.

### DETAILED DESCRIPTION OF THE INVENTION

Dry hop flowers are ground into a powder, pelletized and extracted with super critical carbon dioxide. The Humulone and Lupulone of the resulting CO2 hop extract can be separated using aqueous alkaline pH partitioning techniques commonly used in the hop industry. The Humulone can be isomerized to produce isoalpha acids and or further reduced using sodium borohydride or palladium on carbon catalyzed hydrogen reduction or both to produce rho-isoalpha acids, tetrahydro-isoalpha acids, and hexahydro-isoalpha acids respectively. Alternatively, the Humulone of the the CO₂ extract can first be isomerized to isoalpha acids as described in U.S. patent 5,370,847, followed by separation of the isoalpha acids from the beta acid (Lupulone) hop oil fraction. Humulone, Lupulone, isoalpha acids, rho-isoalpha acids, tetrahydro-isoalpha acids, and hexahydro-isoalpha acids are individually or in combination blended with PPP at concentrations less than 20% w/w, preferably less than 12% w/w to produce non-sticky hop powders.

Using a vertical blend mixer, plough share mixer or the like, PPP is added and while mixing, the concentrated hop acid is slowly added until the desired concentration is achieved. After sufficient time of mixing to insure homogeneity the hop powder is packaged.

In a preferred embodiment, the hop acid comprises an alpha acid, a beta acid, an isoalpha acid, a rho-isoalpha acid, a tetrahydro-isoalpha acid, and a hexahydro-isoalpha acid or a hexahydro-beta acid.

In another and preferred embodiment of the invention, the hop powder is pelletized following the teachings of, e.g., U.S. Patent No. 4,123,561.

For clarity of disclosure, and not by way of limitation, the detailed description of the invention is divided into the subsections set forth below.

### EXAMPLES

### 1. How To Produce 10% Alpha Acids PPP

Two kilograms of CO2 hop extract containing 50%w/w alpha acids is added to 10-kg of water at 60oC and one equivalent of potassium hydroxide solution, based on alpha acid concentration, is added to make a potassium salt of alpha acids. The aqueous layer, containing the potassium salt of alpha acids is separated from the beta acid hop oil fraction and acidified with 50% sulfuric acid in a separate vessel to a pH less than 3.0. The resulting alpha acid resin is isolated from the water layer and blended with approximately 9-kg of PPP in a vertical blend mixer and mixed until a 10%w/w hop powder is formed. The resulting product is a free-flowing, non-sticky powder.

### 2. How to Produce a Beta Acid PPP

The beta acid hop oil fraction from above was isolated and mixed with 8-kg PPP in a vertical blend mixer and mixed until a 8%w/w beta acid concentration was obtained. Alternatively, one can take the beta acid hop oil fraction from above, add it to a vessel contain 10-kg of 60 oC water and one equivalent of potassium hydroxide and mix to form the water soluble potassium salt of beta acids. This aqueous beta acid layer is then sent to a separate vessel and acidified with 50% sulfuric acid to a pH less than 5 to obtain a water layer and beta acid resin layer. The beta acid resin layer can be combined with 6-kg of PPP and mixed in a vertical blend mixer to obtain 10% beta acids PPP. The resulting product is a free-flowing, non-sticky powder.

### 3. How to Make Beta Acid Hop Oil PPP

A beta acids-hop oil resin (50% beta acids) was obtained from aqueous extraction of isomerized kettle extract made from CO₂ extract of hops by method described in U.S. patent No. 5,370,847. 260 g of this hot, beta acids-hop oil resin was slowly poured onto 1.0 kg of warm PPP while being mixed. After mixing for a few minutes, a flowable hop powder was obtained and it consisted of 10.5% beta acids (theoretical was 10.4% beta acids). The resulting product is a free-flowing, non-sticky powder.

### 4. How to Make 10% Isoalpha Acids PPP

Commercially available 30% isoalpha acids is warmed to 60 oC and acidified with 50% sulfuric acid to a pH of less than 3.0. The water layer is separated from the isoalpha acid resin layer. This resin layer is mixed with 9 times its weight of PPP and mixed in a vertical blender until homogenous to obtain a 10% isoalpha acid PPP powder. The resulting product is a free-flowing, non-sticky powder.

### 5.. How to Make 10% Rho-isoalpha Acids PPP

Commercially available 30% Rho-isoalpha acids is warmed to 60 oC and acidified with 50% sulfuric acid to a pH of less than 3.0. The water layer is separated from the rho-isoalpha acid resin layer. This resin layer is mixed with 9 times its weight of PPP and mixed in a vertical blender until homogenous to obtain a 10% Rho-isoalpha acid PPP powder. The resulting product is a free-flowing, non-sticky powder.

### 6. How to Make 10% Tetra-isoalpha Acids PPP

Commercially available 10% Tetrahydro-isoalpha acids is warmed to 60 oC and acidified with 50% sulfuric acid to a pH of less than 3.0. The water layer is separated from the Tetrahydro-isoalpha acid resin layer. This resin layer is mixed with 9 times its weight of PPP and mixed in a vertical blender until homogenous to obtain a 10% Tetrahydro-isoalpha acid PPP powder. The resulting product is a free-flowing, non-sticky powder.

### 7. How to Make 10% Hexahydro-Isoalpha Acids PPP

Commercially available 10% Hexahydro-isoalpha acids is warmed to 60 oC and acidified with 50% sulfuric acid to a pH of less than 3.0 The water layer is separated from the isoalpha acid resin layer. This resin layer is mixed with 9 times its weight of PPP and mixed in a vertical blender until homogenous to obtain a 10% hexahydro-isoalpha acid PPP powder. The resulting product is a free-flowing, non-sticky powder.

It is thus seen the present invention provides a useful hop acid powder that is non-sticky, flowable and does not cake-up. Moreover, unexpectedly, we observed improved stability of Beta Acids + PPP vs Hop Powder containing all the hop resin components. The extracted hop powder/hop acid blend in accordance with the present invention also is observed to be more stable than raw hop powder or hop acids combined with conventional used carriers such as SiO2, matlo-dextrin, cellulose or other commonly used carriers.

## Claims

1. A hop powder blend **characterized by** comprising a blend of (1) a hop powder extracted with liquid or super critical CO₂ gas for removing the hop resin and obtaining an extracted non-sticky hop powder, and (2) one or more hop acids blended into the extracted non-sticky hop powder, wherein the one or more hop acids are selected from the group consisting of an alpha acid, a beta acid, an isoalpha acid, a rho-isoalpha acid, a tetrahydro-isoalpha acid, a hexahydro-isoalpha acid, and a hexahydro-beta acid, and wherein the hop powder blend comprises the one or more hop acids at a concentration of less than 20 % w/w..

2. The hop powder of claim 1, **characterized in that** the hop acid comprises an alpha acid.

3. The hop powder of claim 1, **characterized in that** the hop acid comprises a beta acid.

4. The hop powder of claim 1, **characterized in that** the hop acid comprises an isoalpha acid.

5. The hop powder of claim 1, **characterized in that** the hop acid comprises a rho-isoalpha acid.

6. The hop powder of claim 1, **characterized in that** the hop acid comprises a tetrahydro-isoalpha acid, or a hexahydro-isoalpha acid.

7. The hop powder of claim 1, **characterized in that** the hop acid comprises a hexahydro-beta acid.

8. The hop powder of claim 1, **characterized in that** the hop acid comprises a mixture of more than one hop acids selected from the group consisting of an alpha acid, a beta acid, an isoalpha acid, a rho-isoalpha acid, a tetrahydro-isoalpha acid, a hexahydro-isoalpha acid, and a hexahydro-beta acid.

9. The hop powder of any one of claims 1-8, **characterized in that** the concentration of the hop acid is less than 12% w/w.

10. The hop powder of any one of claims 1-9, **characterized in that** the hop acid comprises a salt of a hop acid.

11. The hop powder of any one of claims 1-10, **characterized by** containing a flow aid to enhance flowability.

12. The hop powder of any one of claims 1-11, **characterized in that** the hop acid is in propylene glycol prior to mixing with the extracted hop powder.

13. The hop powder of any one of claims 1-12, **characterized by** further containing hop oil.

14. The hop powder of any one of claims 1-13, in pelletized form.

15. A method of producing a hop powder blend according to claim 1, the method comprising the steps of:
Grinding dry hop flowers into a powder and pelletizing the powder;
Extracting the pelletized hop powder with supercritical CO₂ gas for removing a hop resin from the hop powder and obtaining an extracted non-sticky hop powder and a CO₂ extract including said hop resin;
Processing the CO₂ extract to separate humulone and lupulone of the CO₂ extract using aqueous alkaline partitioning techniques, and isomerizing the humulone to isoalpha acids, and/or further reducing the humulone using sodium borohydride or palladium on carbon black catalyzed hydrogen reduction, or both, to rho-isoalpha acids, tetrahydroalpha acids, and hexahydroalpha acids; and
Blending one or more of humulone, lupulone, isoalpha acids, rho-isoalpha acids, tetrahydroalpha acids, and hexahydroalpha acids, with said non-sticky hop powder at a concentration less than 20 % w/w.

## Patentansprüche

1. Hopfenpulvermischung, **dadurch gekennzeichnet, dass** sie eine Mischung aus 1) einem Hopfenpulver, das mit flüssigem oder überkritischem CO₂-Gas extrahiert wurde, um das Hopfenharz zu entfernen und ein extrahiertes nicht klebriges Hopfenpulver zu erhalten, und 2) einer oder mehreren Hopfensäuren umfasst, die in das extrahierte nicht klebrige Hopfenpulver gemischt sind, wobei die eine oder die mehreren Hopfensäuren aus der aus einer Alpha-Säure, einer Beta-Säure, einer Isoalpha-Säure, einer Rho-Isoalpha-Säure, einer Tetrahydro-Isoalpha-Säure, einer Hexahydro-Isoalpha-Säure und einer Hexahydro-Beta-Säure bestehenden Gruppe ausgewählt sind und wobei die Hopfenpulvermischung die eine oder die mehreren Hopfensäuren in einer Konzentration von weniger als 20 Gew.-% umfasst.

2. Hopfenpulver nach Anspruch 1, **dadurch gekennzeichnet, dass** die Hopfensäure eine Alpha-Säure umfasst.

3. Hopfenpulver nach Anspruch 1, **dadurch gekennzeichnet, dass** die Hopfensäure eine Beta-Säure umfasst.

4. Hopfenpulver nach Anspruch 1, **dadurch gekennzeichnet, dass** die Hopfensäure eine Isoalpha-Säure umfasst.

5. Hopfenpulver nach Anspruch 1, **dadurch gekennzeichnet, dass** die Hopfensäure eine Rho-Isoalpha-Säure umfasst.

6. Hopfenpulver nach Anspruch 1, **dadurch gekennzeichnet, dass** die Hopfensäure eine Tetrahydro-Isoalpha-Säure oder eine Hexahydro-Isoalpha-Säure umfasst.

7. Hopfenpulver nach Anspruch 1, **dadurch gekennzeichnet, dass** die Hopfensäure eine Hexahydro-Beta-Säure umfasst.

8. Hopfenpulver nach Anspruch 1, **dadurch gekennzeichnet, dass** die Hopfensäure eine Mischung aus mehr als einer Hopfensäure umfasst, die aus der aus einer Alpha-Säure, einer Beta-Säure, einer Isoalpha-Säure, einer Rho-Isoalpha-Säure, einer Tetrahydro-Isoalpha-Säure, einer Hexahydro-Isoalpha-Säure und einer Hexahydro-Beta-Säure bestehenden Gruppe ausgewählt sind.

9. Hopfenpulver nach einem der Ansprüche 1-8, **dadurch gekennzeichnet, dass** die Konzentration der Hopfensäure weniger als 12 Gew.-% beträgt.

10. Hopfenpulver nach einem der Ansprüche 1-9, **dadurch gekennzeichnet, dass** die Hopfensäure ein Salz einer Hopfensäure umfasst.

11. Hopfenpulver nach einem der Ansprüche 1-10, **dadurch gekennzeichnet, dass** es eine Fließhilfe zur Verbesserung der Fließfähigkeit enthält.

12. Hopfenpulver nach einem der Ansprüche 1-11, **dadurch gekennzeichnet, dass** die Hopfensäure vor dem Vermischen mit dem extrahierten Hopfenpulver in Propylenglycol vorliegt.

13. Hopfenpulver nach einem der Ansprüche 1-12, **dadurch gekennzeichnet, dass** es ferner Hopfenöl enthält.

14. Hopfenpulver nach einem der Ansprüche 1-13 in pelletierter Form.

15. Verfahren zur Herstellung einer Hopfenpulvermischung nach Anspruch 1, wobei das Verfahren die folgenden Schritte umfasst:
Mahlen trockener Hopfenblüten zu einem Pulver und Pelletieren des Pulvers;
Extrahieren des pelletierten Hopfenpulvers mit überkritischem CO₂-Gas, um ein Hopfenharz aus dem Hopfenpulver zu entfernen und ein extrahiertes nicht klebriges Hopfenpulver und einen CO₂-Extrakt zu erhalten, der das Hopfenharz aufweist;
Verarbeiten des CO₂-Extrakts zur Abtrennung von Humulon und Lupulon des CO₂-Extrakts unter Verwendung wässriger, alkalischer Trennungstechniken und Isomerisieren des Humulons zu Isoalpha-Säuren, und/oder weiteres Reduzieren des Humulons unter Verwendung von mittels Natriumborhydrid oder Palladium auf Ruß katalysierter Wasserstoffreduktion oder beidem zu Rho-Isoalpha-Säuren, Tetrahydroalpha-Säuren und Hexahydroalpha-Säuren; und
Mischen von Humulon, Lupulon, Isoalpha-Säuren, Rho-Isoalpha-Säuren, Tetrahydroalpha-Säuren und Hexahydroalpha-Säuren oder mehrerer davon mit dem nicht klebrigen Hopfenpulver in einer Konzentration von weniger als 20 Gew.-%.

## Revendications

1. Mélange de poudre de houblon, **caractérisé en ce qu'**il comprend un mélange (1) d'une poudre de houblon extraite avec du liquide ou du gaz de CO₂ supercritique pour retirer la résine de houblon et pour obtenir une poudre de houblon non collante extraite, et (2) un ou plusieurs acides de houblon mélangés dans la poudre de houblon non collante extraite, le ou les plusieurs acides de houblon étant choisis dans le groupe constitué d'un acide alpha, d'un acide béta, d'un acide isoalpha, d'un acide rho-isoalpha, d'un acide tétrahydro-isoalpha, d'un acide hexahydro-isoalpha et d'un acide hexahydro-béta, et le mélange de poudre de houblon comprenant le ou les plusieurs acides de houblon dans une concentration inférieure à 20% en poids.

2. Poudre de houblon selon la revendication 1, **caractérisée en ce que** l'acide de houblon comprend un acide alpha.

3. Poudre de houblon selon la revendication 1, **caractérisée en ce que** l'acide de houblon comprend un acide bêta.

4. Poudre de houblon selon la revendication 1, **caractérisée en ce que** l'acide de houblon comprend un acide isoalpha.

5. Poudre de houblon selon la revendication 1, **caractérisée en ce que** l'acide de houblon comprend un acide rho-isoalpha.

6. Poudre de houblon selon la revendication 1, **caractérisée en ce que** l'acide de houblon comprend un acide tétrahydro-isoalpha ou un acide hexahydro-isoalpha.

7. Poudre de houblon selon la revendication 1, **caractérisée en ce que** l'acide de houblon comprend un acide hexahydro-bêta.

8. Poudre de houblon selon la revendication 1, **caractérisée en ce que** l'acide de houblon comprend une mixture de plus d'un acide de houblon choisis dans le groupe constitué d'un acide alpha, d'un acide béta, d'un acide isoalpha, d'un acide rho-isoalpha, d'un acide tétrahydro-isoalpha, d'un acide hexahydro-isoalpha et d'un acide hexahydro-béta.

9. Poudre de houblon selon l'une des revendications 1-8, **caractérisée en ce que** la concentration de l'acide de houblon est inférieure à 12% en poids.

10. Poudre de houblon selon l'une des revendications 1-9, **caractérisée en ce que** l'acide de houblon comprend un sel d'un acide de houblon.

11. Poudre de houblon selon l'une des revendications 1-10, **caractérisée en ce qu'**elle contient un auxiliaire d'écoulement pour améliorer l'aptitude à l'écoulement.

12. Poudre de houblon selon l'une des revendications 1-11, **caractérisée en ce que** l'acide de houblon est sous forme de propylène glycol avant le mélange avec la poudre de houblon extraite.

13. Poudre de houblon selon l'une des revendications 1-12, **caractérisée en ce qu'**elle contient en outre de l'huile de houblon.

14. Poudre de houblon selon l'une des revendications 1-13 sous forme granulée.

15. Procédé de fabrication d'un mélange de poudre de houblon selon la revendication 1, le procédé comprenant les étapes suivantes :
Broyage de fleurs de houblon sèches en une poudre et granulage de la poudre ;
Extraction de la poudre de houblon granulée avec du gaz de CO₂ supercritique pour retirer une résine de houblon de la poudre de houblon et pour obtenir une poudre de houblon non collante extraite et un extrait de CO₂ comprenant la résine de houblon ;
Traitement de l'extrait de CO₂ pour séparer de l'humulone et de la lupulone de l'extrait de CO₂ en utilisant des techniques de séparation alcalines aqueuses, et isomérisation de l'humulone en acides isoalpha, et/ou réduction supplémentaire de l'humulone en utilisant une réduction d'hydrogène catalysée par du borohydrure de sodium ou du palladium sur du noir de carbone ou les deux pour obtenir des acides rho-isoalpha, des acides tétrahydro-isoalpha et des acides hexahydro-isoalpha ; et
Mélange d'humulone, de lupulone, d'acides isoalpha, d'acides rho-isoalpha, d'acides tétrahydro-isoalpha et d'acides hexahydro-isoalpha avec la poudre de houblon non collante dans une concentration inférieure à 20% en poids.
